# EUROPÄISCHE PATENTSCHRIFT

(11) **EP 1 764 527 B1**
(45) Veröffentlichungstag und Bekanntmachung des Hinweises auf die Patenterteilung: **03.12.2008**
(21) Anmeldenummer: 06019229.1
(22) Anmeldetag: 14.09.2006
(51) Int. Cl.: F16D 55/225, F16D 65/097

(54) **Scheibenbremse**
Disc brake
Frein à disque

(30) Priorität: 15.09.2005 DE 102005044091
(43) Veröffentlichungstag der Anmeldung: 21.03.2007
(73) Patentinhaber: KNORR-BREMSE SYSTEME FÜR NUTZFAHRZEUGE GMBH, 80809 München (DE)
(72) Erfinder: Pritz, Wolfgang, 94501 Aldersbach (DE); Trimpe, Robert, 82234 Weßling (DE); Helf, Anton, 82139 Söchtenau (DE)
(74) Vertreter: Schönmann, Kurt

(56) Entgegenhaltungen:
- EP-A1- 0 703 378
- EP-A1- 1 069 334
- EP-A2- 0 877 176
- DE-B3- 10 302 332
- DE-U1- 8 615 015
- US-A- 5 205 383

## Beschreibung

Die vorliegende Erfindung betrifft eine Scheibenbremse, insbesondere für ein Nutzfahrzeug, gemäß dem Oberbegriff des Anspruchs 1.

Eine derartige Scheibenbremse ist beispielsweise aus der DE 86 15 015 U1 bekannt. Der Haltebügel dieser Scheibenbremse dient im wesentlichen dazu, für Federn, in diesem Fall Blattfedern, die die Bremsbacken federnd verspannen, ein Widerlager zu bilden. Der Haltebügel ist lösbar am Bremssattel befestigt, um sowohl eine schnelle Montage wie auch Demontage vor allem der Bremsbacken zu gewährleisten. Letzteres beispielsweise, um einen für einen Bremsbelagwechsel notwendigen Zugriff auf die Bremsbacken problemlos zu ermöglichen.

Hierzu trägt auch bei, dass der Haltebügel mit einfachen Mitteln an- und abzubauen ist, wozu er einerseits in eine Ausnehmung des Bremssattels eingesteckt ist und andererseits mit dem Bremssattel, unter Überbrückung einer Einstecköffnung für die Bremsbacken durch Verschrauben fest verbunden ist.

Die taschenförmige Ausnehmung ist dabei auf der sozusagen die Bremsenaußenseite bildenden Seite des Bremssattels vorgesehen, die einer im Bremssattel angeordneten Zuspanneinrichtung gegenüberliegt, die die Bremseninnenseite, also die der Fahrzeugmitte zugewandte Seite bildet. Dabei kann die taschenförmige Ausnehmung durch mechanische Bearbeitung eingebracht sein oder bei Herstellung des Bremssattels durch Gießen gleich mit eingeformt werden.

Mit seinem anderen, der Zuspanneinrichtung zugewandten Ende ist der Haltebügel mit dem Bremssattel verschraubt. Allerdings ist hierzu eine entsprechend aufwendige Bearbeitung erforderlich, das heißt ein Bohren der Kernbohrung und ein anschließendes Gewindeschneiden. Da solche Scheibenbremsen in großen Stückzahlen hergestellt werden stehen solche Arbeitsgänge einer optimierten Fertigung entgegen, so dass das Produkt insgesamt nur mit einem entsprechend hohen Aufwand herstellbar ist.

Darüber hinaus kann es durch den Betrieb aufgrund von Witterungseinflüssen oder aufgrund von Verschmutzungen zu einem Festsetzen der Schraube kommen, die sich dann nur beschwerlich lösen lässt, was einer gewünschten schnellen Demontage naturgemäß entgegensteht und somit sich nachteilig auf die Betriebskosten auswirkt.

Aus der EP 0877176 A2 ist eine Scheibenbremse bekannt, bei der der Haltebügel aus einem gebogenen Draht gebildet ist. In einem Ausführungsbeispiel ist dieser Haltebügel mit seinem dem Aufnahmeraum zugewandten Ende durch eine mit dem Bremssattel verschraubte Platte gesichert, im Zusammenwirken mit einer an den Bremssattel angeformten Leiste.

Der vorliegenden Erfindung liegt die Aufgabe zugrunde, eine Scheibenbremse der gattungsgemäßen Art so weiter zu entwickeln, dass sie kostengünstiger herstellbar ist und die Montage, insbesondere die Demontage der Bremsbacken einfacherer möglich ist.

Diese Aufgabe wird durch eine Scheibenbremse mit den Merkmalen des Anspruchs 1 gelöst.

Durch diese konstruktive Ausbildung ist nun eine wesentlich einfachere Montage bzw. Demontage des Haltebügels und damit der Bremsbacken möglich, da der Haltebügel mit geringem Arbeitsaufwand einzusetzen bzw. zu entfernen ist.

Darüber hinaus ist die Herstellung der Scheibenbremse erheblich einfacher, da auf das zusätzliche Einbringen einer Gewindebohrung in den Bremssattel durch Einbringen einer Kernbohrung und Einschneiden eines Gewindes verzichtet werden kann.

Der Bolzen kann einstückig mit dem Bremssattel im übrigen ausgebildet sein, wenn dieser als Gussteil hergestellt ist.

Prinzipiell denkbar ist jedoch auch, den Bolzen mit einem Gewindezapfen zu versehen, der dann in eine im Bremssattel angeordnete Gewindebohrung eingeschraubt wird, wodurch natürlich der vorgenannte Fertigungsvorteil nicht in dem Maße gegeben ist.

Allerdings ist in jedem Fall gewährleistet, dass sich der Haltebügel problemlos lösen lässt, da Witterungs- und/oder Betriebseinflüsse ohne Einfluss auf eine leichte Lösbarkeit des Haltebügels bleiben.

Der auf den Bolzen aufgesteckte Haltebügel wird durch Sicherungsmittel gehalten, durch die ein unbeabsichtigtes Lösen des Haltebügels ausgeschlossen ist.

Dabei ist nach einer vorteilhaften Weiterbildung der Erfindung vorgesehen, den Bolzen mit einer Querbohrung oder einer umlaufenden Ringnut zu versehen, die beide Male dem formschlüssigen Halten eines Sicherungsmittels dienen.

In die Querbohrung kann ein Sicherungsstift eingesetzt werden, der durch ein angeschlossenes Sicherungselement axial und/oder gegen Verdrehen gesichert ist.

Ein solches Sicherungselement kann aus einem fest mit dem Sicherungsstift verbundenen Klemmblech bestehen, das den Bolzen übergreift und an der der Einstecköffnung gegenüberliegenden Seite anliegt.

Denkbar ist auch den Sicherungsstift mit einem Ring zu versehen, der nach Einstecken des Sicherungsstiftes über den Bolzen gelegt wird und sich an diesem abstützt.

Bei einer vorgesehnen Ringnut zur Sicherung des Haltebügels kann ein Spreng- oder Federring eingesetzt werden, der ohne weiteres im Bedarfsfall zu entfernen ist.

In jedem Fall zeichnen sich die Sicherungsmittel durch ihre einfache Bauweise und ebenso einfache Handhabung sowohl hinsichtlich der Montage wie auch der Demontage aus.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine erfindungsgemäße Scheibenbremse in einer Draufsicht
- Figur 2: einen Teilausschnitt der Scheibenbremse nach Figur 1 in einer perspektivischen Ansicht
- Figuren 3 u. 4: jeweils ein Ausführungsbeispiel der Erfindung, dargestellt in einem perspektivischen Teilausschnitt
- Figur 5: einen Teilquerschnitt durch die Scheibenbremse nach Figur 1
- Figur 6: eine Einzelheit der Erfindung in zwei verschiedenen Ansichten
- Figur 7: ein weiteres Ausführungsbeispiel der Einzelheit nach Figur 6 in zwei verschiedenen Ansichten
- Figur 8: ein weiteres Ausführungsbeispiel einer Einzelheit der Erfindung in zwei verschiedenen Ansichten
- Figur 9: eine Einzelheit der Erfindung in einer Draufsicht
- Figur 10: ein weiteres Ausführungsbeispiel einer Einzelheit, ebenfalls in einer Draufsicht
- Figur 11: ein weiteres Ausführungsbeispiel einer Einzelheit in zwei verschiedenen Ansichten

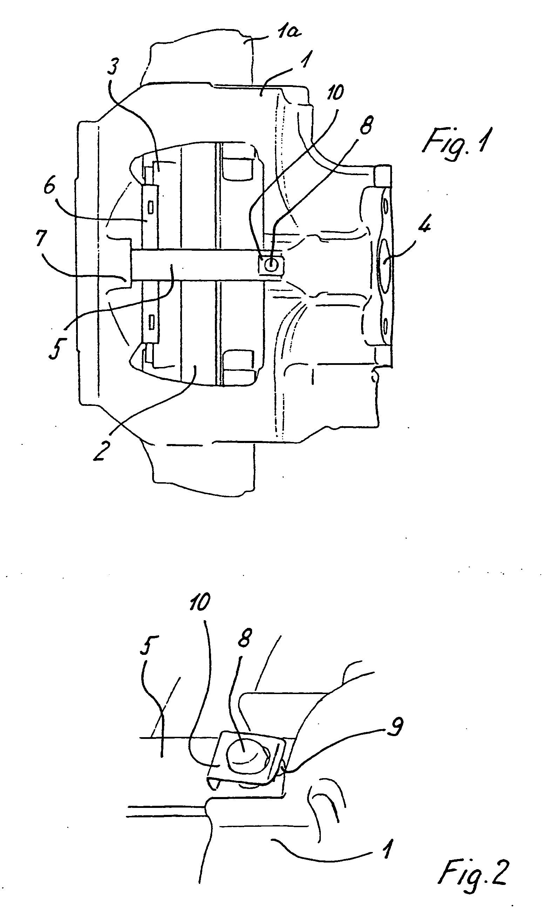

In der Figur 1 ist eine Scheibenbremse, insbesondere für ein Nutzfahrzeug dargestellt, mit einem Bremssattel 1, der einen Aufnahmeraum 4 für eine nicht dargestellte Zuspanneinrichtung aufweist und in dem eine mit Bremsbacken 3 in Wirkverbindung bringbare Bremsscheibe angeordnet ist, wobei in der Darstellung der Figur 1 lediglich eine Bremsbacke 3 gezeigt ist. Der Bremssattel 1 ist an einem fahrzeugseitigen Bremsträger 1 a befestigt.

An dem Bremssattel 1 ist ein Haltebügel 5 lösbar befestigt, der eine Einführöffnung des Bremssattels 1 zum Einbringen der Bremsbacken 3 überspannt und als Niederhalter für Federn 6 dient, die auf die Außenkanten der Bremsbacken 3 einwirken.

Mit seinem dem Aufnahmeraum 4 für die Zuspanneinrichtung abgewandten Seite ist der Haltebügel 5 in eine Aufnahme 7 des Bremssattels 1 eingesteckt, während er mit seinem anderen Ende auf einen Bolzen 8 des Bremssattels 1 aufgesteckt und durch ein Sicherungsmittel gehalten ist.

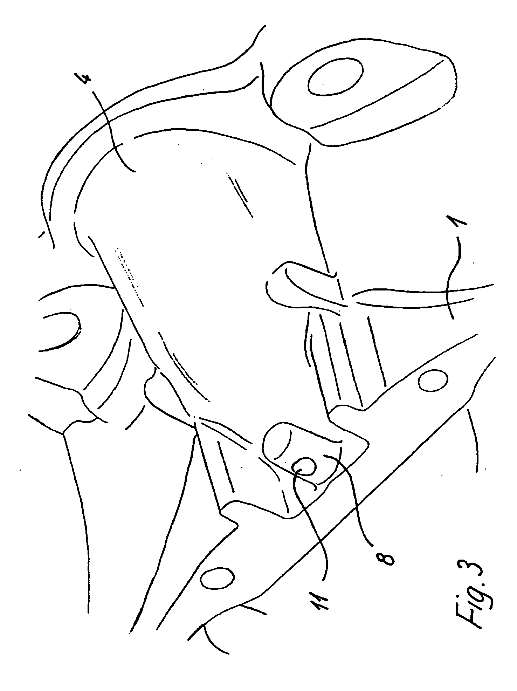

Bei dem in der Figur 2 sowie den Figuren 5 bis 7 gezeigten Beispiel besteht dieses Sicherungsmittel aus einem Sicherungsstift 9, der in eine Querbohrung 11 (Figur 3) des Bolzens 8 eingesteckt ist, sowie einem an dem Sicherungsstift 9 befestigten Sicherungsblech 10.

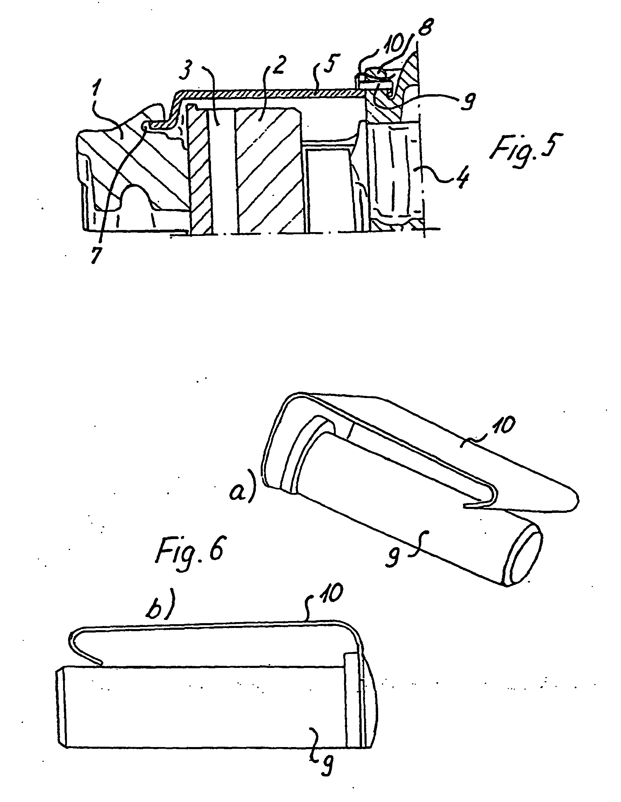

Bei dem in der Figur 6 gezeigten Ausführungsbeispiel des Sicherungselementes ist das Sicherungsblech 10 am Kopf des Sicherungsstiftes 9 festgelegt und verläuft im wesentlichen parallel zu dessen Längsachse, während das freie Ende abgewinkelt ist.

In Funktionsstellung liegt das in der Figur 6 in der Abbildung a) perspektivisch und in der Abbildung b) in einer Seitenansicht dargestellte Sicherungsblech 10 an der Stirnseite des Bolzens 8 an, während der abgewinkelte Endbereich den Bolzen hintergreift, so dass eine axiale Sicherung des Sicherungsstiftes gewährleistet ist. Stirnseite des Bolzens 8 an, während der abgewinkelte Endbereich den Bolzen hintergreift, so dass eine axiale Sicherung des Sicherungsstiftes 9 gewährleistet ist.

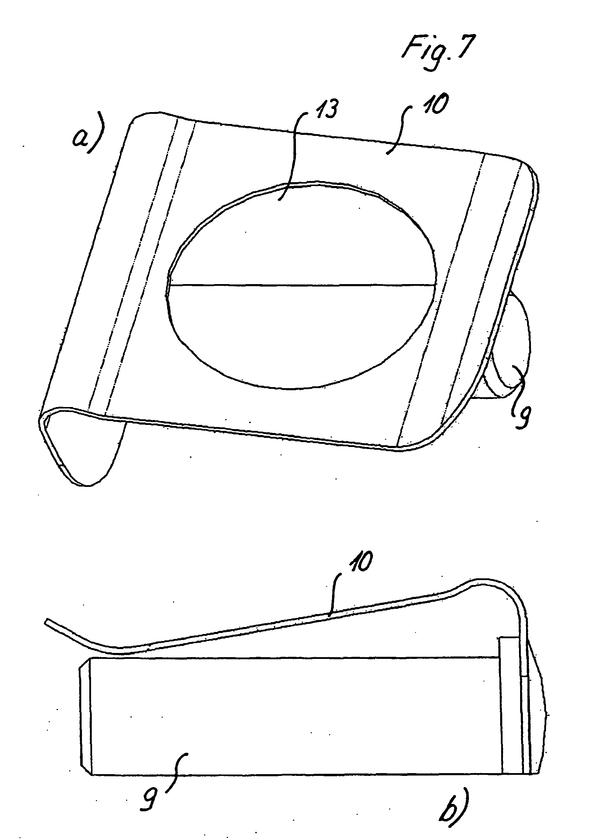

Bei dem Ausführungsbeispiel nach der Figur 7, in der Abbildung a) ebenfalls perspektivisch und in b) in einer Seitenansicht gezeigt, weist das Sicherungsblech 10 eine Durchstecköffnung 13 auf, die von dem Bolzen 8 durchtreten wird und die in ihrem Durchmesser etwa dem Durchmesser des Bolzens 8 entspricht. Die Funktionsstellung dieser Ausführungsvariante ist in den Figuren 2 und 5 erkennbar. Während der abgewinkelte Endbereich des Sicherungsbleches nach Figur 6 in Richtung des Sicherungsstiftes 9 weist, ist er im Beispiel nach Figur 7 entgegengesetzt ausgerichtet.

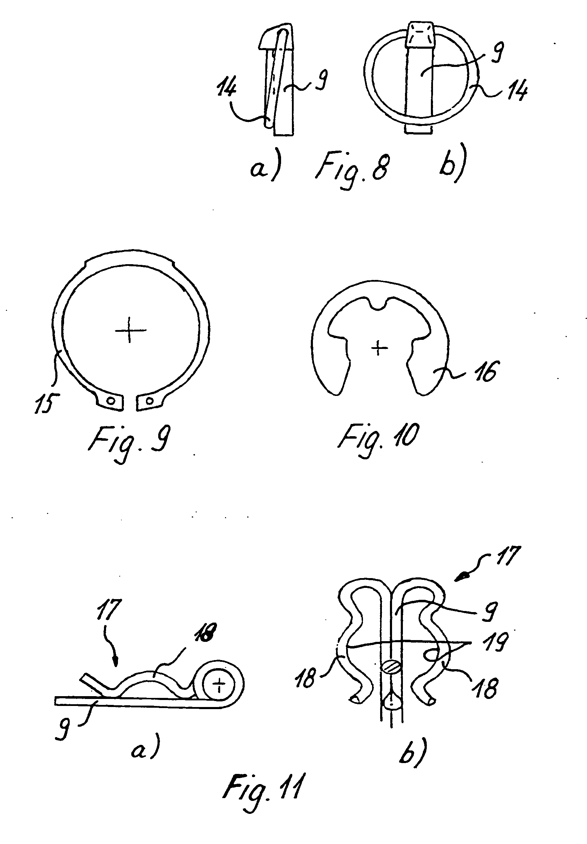

In den Figuren 8 und 11 sind ebenfalls Sicherungsmittel dargestellt, die in die Querbohrung 11 des Bolzens 8 einsteckbar sind. Diese bestehen gleichfalls aus einem Sicherungsstift 9 und, bei dem in der Figur 8 gezeigten Beispiel, aus einem damit verbundenen Ring 14, der nach einem Einführen des Sicherungsstiftes 9 in die Querbohrung 11 über den Bolzen 8 gelegt wird, so dass auch hierdurch eine axiale Sicherung des Sicherungsstiftes 9 gewährleistet ist.

Das Sicherungselement nach Figur 11 ist als Sicherungsbügel 17 ausgebildet, der gleichfalls einen in die Querbohrung 11 einsteckbaren Sicherungsstift 9 aufweist, an dem sich rechts und links jeweils ein Federschenkel 18 anschließt, der mit einer Ausbauchung 19 versehen ist, in der nach einem Einschieben des Sicherungsstiftes 9 in die Querbohrung 11 der Bolzen 8 unter Federspannung des Federschenkels 18 anliegt. Dabei kann der Sicherungsbügel 17 aus zwei spiegelsymmetrischen Drahtteilen gebildet sein, von denen zwei gerade Schenkel, die miteinander verbunden sind, den Sicherungsstift 9 bilden. Die Abbildung a) zeigt eine Seitenansicht und die Abbildung b) eine Draufsicht des Sicherungsbügels 17.

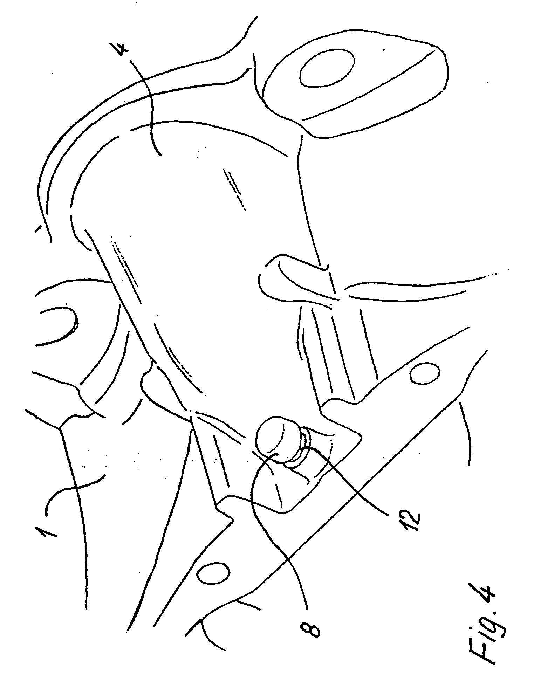

Die Figuren 9 und 10 schließlich zeigen Sicherungselemente in Form eines Sprengrings 15 (Figur 9) bzw. eines Sicherungsringes 16 (Figur 10). Diese sind in eine Ringnut 12 (Figur 4) des Bolzens 8 einsetzbar, wenn der Haltebügel 5 aufgesteckt ist, so dass eine axiale Sicherung des Haltebügels 5 auf dem Bolzen 8 gewährleistet ist.

### Bezugszeichenliste

- 1: Bremssattel
- 1a: Bremsträger
- 2: Bremsscheibe
- 3: Bremsbacke
- 4: Aufnahmeraum
- 5: Haltebügel
- 6: Feder
- 7: Aufnahme
- 8: Bolzen
- 9: Sicherungsstift
- 10: Sicherungsblech
- 11: Querbohrung
- 12: Ringnut
- 13: Durchstecköffnung
- 14: Ring
- 15: Sprengring
- 16: Sicherungsring
- 17: Sicherungsbügel
- 18: Federschenkel
- 19: Ausbauchung

## Patentansprüche

1. Scheibenbremse, insbesondere für ein Nutzfahrzeug, mit einem einen Aufnahmeraum (4) für eine Zuspanneinrichtung aufweisenden Bremssattel (1), der eine mit Bremsbacken (3) in Wirkverbindung bringbare Bremsscheibe (2) aufweist und an einem Bremsträger (1a) befestigt ist, sowie einem lösbar am Bremssattel (1) befestigten streifenförmigen Haltebügel (5), an dem sich auf die Außenkanten der Bremsbacken (3) einwirkende Federn (6) abstützen, wobei der Haltebügel (5) mit seinem dem Aufnahmeraum (4) abgewandten Ende in eine Aufnahme (7) des Bremssattels (1) eingesteckt ist, **dadurch gekennzeichnet, dass** zur Festlegung des Haltebügels (5) an seinem dem Aufnahmeraum (4) zugewandten Ende am Bremssattel (1) ein Bolzen (8) vorgesehen ist, auf den der Haltebügel (5) aufgesteckt und durch Sicherungsmittel gehalten ist.

2. Scheibenbremse nach Anspruch 1, **dadurch gekennzeichnet, dass** der Bolzen (8) zur Aufnahme des Sicherungsmittels eine Querbohrung (11) aufweist.

3. Scheibenbremse nach Anspruch 1, **dadurch gekennzeichnet, dass** der Bolzen (8) zur Aufnahme des Sicherungsmittels eine Ringnut (12) aufweist.

4. Scheibenbremse nach einem der vorhergehenden Ansprüche, **dadurch gekennzeichnet, dass** das Sicherungsmittel einen in die Querbohrung (11) eingesteckten Sicherungsstift (9) aufweist.

5. Scheibenbremse nach Anspruch 4, **dadurch gekennzeichnet, dass** mit dem Sicherungsstift (9) ein Sicherungselement fest verbunden ist, mit dem der Sicherungsstift (9) am Bolzen (8) axial gesichert gehalten ist.

6. Scheibenbremse nach einem der vorhergehenden Ansprüche, **dadurch gekennzeichnet, dass** als Sicherungselement ein Sicherungsblech (10) vorgesehen ist, das an einem Kopf des Sicherungsstiftes (9) befestigt ist und eine Stirnseite des Bolzens (8) überdeckt, wobei das abgewinkelte freie Ende des Sicherungsbleches (10) an der Seitenwand des Bolzens (8) anliegt.

7. Scheibenbremse nach Anspruch 6, **dadurch gekennzeichnet, dass** das Sicherungsblech (10) eine Durchstecköffnung (13) aufweist, die von dem Bolzen (8) durchtreten wird.

8. Scheibenbremse nach einem der vorhergehenden Ansprüche, **dadurch gekennzeichnet, dass** das Sicherungsmittel als Sicherungsbügel (17) ausgebildet ist, mit einem Sicherungsstift (9) und zwei außenseitig am Bolzen (8) unter Federspannung anliegenden Federschenkeln (18).

9. Scheibenbremse nach einem der vorhergehenden Ansprüche, **dadurch gekennzeichnet, dass** als Sicherungselement ein mit dem Sicherungsstift (9) verbundener Ring (14) vorgesehen ist, der nach einem Einstecken des Sicherungsstiftes (9) in die Querbohrung (11) über den Bolzen (8) schwenkbar ist.

10. Scheibenbremse nach einem der vorhergehenden Ansprüche 3 bis 9, **dadurch gekennzeichnet, dass** als Sicherungsmittel ein in die Ringnut (12) eingreifende Sicherungsringe in Form eines Sprengrings (15) oder dergleichen eingesetzt ist.

## Claims

1. Disc brake, in particular for a commercial vehicle, including a receiving space (4) for accommodating a brake calliper (1) provided with a brake applicator means, which comprises a brake disc (2) adapted to be brought into operative connection to brake shoes (3) and which is fastened at a brake backing plate (1a), as well as including a strip-shaped retaining bracket (5) detachably fastened on said brake calliper (1), on which springs (6) are supported which act upon the outside edges of said brake shoes (3), with said retaining bracket (5) being plugged by its end facing away from said receiving space (4) into a receiving part (7) of said brake calliper (1), **characterised in that** a bolt (8) is provided for fixing said retaining bracket (5), by its end facing said receiving space (4), on said brake calliper (1), onto which bolt said retaining bracket (5) is plugged and retained thereon by locking means.

2. Disc brake according to Claim 1, **characterised in that** said bolt (8) presents a transverse bore (11) for receiving said locking means.

3. Disc brake according to Claim 1, **characterised in that** said bolt (8) presents an annular groove (12) for receiving said locking means.

4. Disc brake according to any of the preceding Claims, **characterised in that** said locking means includes a securing pin (9) inserted into said transverse bore (11).

5. Disc brake according to Claim 4, **characterised in that** a locking element is fixedly connected to said securing pin (9), by means of which said securing pin (9) is retained and axially secured on said bolt (8).

6. Disc brake according to any of the preceding Claims, **characterised in that** a locking plate (10) is provided as locking element, which is fastened on one head of said securing pin (9) and overlaps a face side of said bolt (8), with the bent free end of said locking plate (10) bearing against the lateral wall of said bolt (8).

7. Disc brake according to Claim 6, **characterised in that** said locking plate (10) presents a through-hole (13) through which said bolt (8) is passed.

8. Disc brake according to any of the preceding Claims, **characterised in that** said locking means is configured in the form of a locking bracket (17) having a securing pin (9) and two resilient branches (18) bearing against the outside of said bolt (8) under the bias of springs.

9. Disc brake according to any of the preceding Claims, **characterised in that** a ring (14) is provided as locking means, which is connected to said securing pin (9) and which is adapted to be pivoted over said bolt (8) after insertion of said securing pin (9) into said transverse bore (11).

10. Disc brake according to any of the preceding Claims 3 to 9, **characterised in that** retaining rings in the form of a snap ring (15) or the like are provided as locking means, which are engaged into said annular groove (12).

## Revendications

1. Frein à disque, en particulier pour un véhicule utiliaire, comprenant un compartiment de positionnement (4) à recevoir un étrier de frein (1) pourvu d'un moyen à serrer le frein, qui comprend un disque de frein (2) apte à être porté en raccord fonctionnel aux mâchoires de freinage (3) et qui est fixé à une flasque de frein (1a), et comprenant également un étrier de retenue (5) en bande, qui est fixé audit étrier de frein (1)de façon détachable, sur lequel des ressorts (6) s'appuyent, qui agissent sur les bords extérieurs desdites mâchoires de freinage (3), audit étrier de retenue (5) étant attaché, par son extrémité opposée audit compartiment de positionnement (4), dans un élément de réception (7) dudit étrier de frein (1), **caractérisé en ce qu'**un boulon (8) eset disposé à fixer ledit étrier de retenue (5), par son extrémité en face dudit compartiment de positionnement (4), audit étrier de frein (1), sur lequel boulon s'attache ledit étrier de retenue (5), en étant retenu là par un moyen de blocage.

2. Frein à disque selon la revendication 1, **caractérisé en ce que** ledit boulon (8) présente un alésage transversal (11) à recevoir ledit moyen de blocage.

3. Frein à disque selon la revendication 1, **caractérisé en ce que** ledit boulon (8) présente une rainure annulaire (12) à recevoir ledit moyen de blocage.

4. Frein à disque selon une quelconque des revendications précédentes, **caractérisé en ce que** ledit moyen de blocage comprend une goupille de sécurité (9) insérée dans ledit alésage transversal (11).

5. Frein à disque selon la revendication 4, **caractérisé en ce qu'**un élément de blocage est relié, de facon fixe, à ladite goupille de sécurité (9), moyennant duquel ladite goupille de sécurité (9) est retenue et bloquée, en sens axial, audit boulon (8).

6. Frein à disque selon une quelconque des revendications précédentes, **caractérisé en ce qu'**une rondelle d'arrêt (10) est disposée en tant que l'élément de blocage, qui est fixée à une tête de ladite goupille de sécurité (9), en chevauchant une face dudit boulon (8), à l'extrémité libre cintrée de ladite rondelle d'arrêt (10) portant contre la paroi latérale dudit boulon (8).

7. Frein à disque selon la revendication 6, **caractérisé en ce que** ladite rondelle d'arrêt (10) présente un trou de passage (13). à travers duquel ledit boulon (8) passe.

8. Frein à disque selon une quelconque des revendications précédentes, **caractérisé en ce que** ledit moyen de blocage est configuré sous forme d'un étrier d'arrêt (17) ayant une goupille de sécurité (9) et deux bras élastiques (18), qui portent contre l'extérieur dudit boulon (8) sous la précontrainte des ressorts.

9. Frein à disque selon une quelconque des revendications précédentes, **caractérisé en ce qu'**un anneau (14) est disposé en tant que moyen de blocage, qui est relié à ladite goupille de sécurité (9) et qui est apte à être pivoté sur ledit boulon (8) après l'introduction de ladite goupille de sécurité (9) dans ledit alésage transversale (11).

10. Frein à disque selon une quelconque des revendications précédentes 3 to 9, **caractérisé en ce que** des anneaux de retenue sous forme d'un circlips (15) ou élément similaire sont disposés en tant que moyen de blocage, qui se trouvent en prise dans ladite rainure annulaire (12).
